# EUROPÄISCHE PATENTSCHRIFT

(11) **EP 0 808 754 B1**
(45) Veröffentlichungstag und Bekanntmachung des Hinweises auf die Patenterteilung: **21.04.1999**
(21) Anmeldenummer: 97108155.9
(22) Anmeldetag: 20.05.1997
(51) Int. Cl.: B60S 3/06

(54) **Verfahren und Vorrichtung zum Waschen von Fahrzeugen**
Method and means for washing motor vehicles
Procédé et dispositif de lavage pour véhicules automobiles

(30) Priorität: 21.05.1996 DE 19620400
(43) Veröffentlichungstag der Anmeldung: 26.11.1997
(73) Patentinhaber: WESUMAT Fahrzeugwaschanlagen GmbH, D-86156 Augsburg (DE)
(72) Erfinder: Pommer, Rainer, 86391 Stadtbergen (DE)
(74) Vertreter: Liebau, Gerhard, Dipl.-Ing.

(56) Entgegenhaltungen:
- EP-A- 0 407 695
- GB-A- 1 144 114
- GB-A- 1 393 201
- US-A- 3 090 981
- US-A- 5 245 725

## Beschreibung

Die Erfindung betrifft ein Verfahren zum Waschen von Fahrzeugen gemäß dem Oberbegriff des Anspruches 1. Die Erfindung betrifft auch eine Vorrichtung zum Waschen von Fahrzeugen gemäß dem Oberbegriff des Anspruches 7.

Zum Waschen von Fahrzeugen sind sogenannte Portalwaschanlagen bekannt ( vgl. das Dokument DE 36 16 817 C1, das alle Merkmale der Oberbegriffe der Ansprüche 1 und 7 offenbart) bei denen in einem oder zwei gegenüber dem ruhenden Fahrzeug verfahrbaren Portalen für jede Fahrzeugseite zwei ausweichfähig gelagerte Seitenbürsten vorgesehen sind, mit denen jeweils die Hälfte der Front, eine Seitenfläche und die Hälfte des Hecks eines Fahrzeuges gewaschen werden können, während die beiden der anderen Fahrzeugseite zugeordneten Seitenbürsten die andere Hälfte des Fahrzeuges an den beschriebenen Fahrzeugabschnitten waschen. Während früher die Vorwäsche des Fahrzeuges vor dem Einfahren in die Portalwaschanlage von einer Bedienungsperson mittels einer von Hand geführten Hochdruckreinigungsvorrichtung ausgeführt wurde, werden neuerdings Hochdruckreinigungseinrichtungen direkt am Portal angeordnet. Stationär am Portal angeordnete Hochdruckdüsen haben jedoch entweder eine unzureichende Vorwaschwirkung, weil ihr Abstand vom Fahrzeug auf einer Fahrzeugseite meist zu groß ist, oder es muß mit sehr hohem Druck und entsprechend hohem Wasserverbrauch gearbeitet werden. Deshalb wurde auch schon versucht, die Hochdruckdüsen an dem Portal an verfahrbaren oder ausschwenkbaren Trägern anzuordnen, was jedoch einen erhöhten Herstellungsaufwand erfordert und außerdem die Waschanlage störanfällig macht. Außerdem arbeiten Seitenbürsten, die sich über die ganze Fahrzeughöhe erstrecken, bei eiförmigen Fahrzeugen unbefriedigend, da sie der Kontur des Fahrzeuges nicht in ausreichender Weise folgen können.

Um diesen Nachteil zu beseitigen, wurde in dem DE-GM 1 966 084 eine Portalwaschvorrichtung vorgeschlagen, bei denen jeweils an jeder Seite der Portalständer zwei unabhängig voneinander einschwenkbare Waschbürsten angeordnet sind, die jeweils an doppelarmigen Schwenkbügeln gelagert sind und auch jeweils unabhängig voneinander antreibbar sind. Die Waschwirkung dieser Portalwaschvorrichtung ist zwar bei Fahrzeugen mit eiförmiger Kontur besser, jedoch ist das Problem der Hochdruckvorwäsche auch hier ungelöst.

Denselben Nachteil hat eine andere Portalwaschanlage gemäß der DE-AS 22 31 846, bei der in zwei getrennt verfahrbaren Portalen jeweils zwei Seitenwasch-bürsten angeordnet sind. Jedes dieser Portale weist auch eine, um eine horizontale Achse rotierende Dachbürste auf, mit der auch die Front bzw. das Heck eines Fahrzeuges gewaschen werden kann. Die beiden Portale und ihre darin angeordneten Dach- und Seitenbürsten werden so gesteuert, daß mit den Seitenbürsten des einen Protals die vordere Hälfte der Seitenflächen des Fahrzeuges und mit den Seitenbürsten des anderen Portals die hintere Hälfte der Seitenflächen gewaschen wird. Mit der einen Dachbürste wird die Front und die Hälfte des Daches, mit der anderen Dachbürste die andere Hälfte des Daches und das Heck gewaschen. Hochdruckreinigungseinrichtungen sind nicht vorgesehen.

Der Erfindung liegt deshalb die Aufgabe zugrunde, ein Verfahren und eine Vorrichtung zum Waschen von Fahrzeugen zu schaffen, die mit weniger Aufwand ein besseres Waschergebnis und teilweise, je nach Programmwahl, eine Verkürzung der Behandlungszeit ermöglichen.

Die Erfindung löst diese Aufgabe mit den im Verfahrensanspruch 1 sowie im Vorrichtungsanspruch 7 angegebenen Merkmalen.

Die Erfindung geht dabei von dem Gedanken aus, die Seitenbürstenrohre jeweils nur in ihrem oberen oder unteren Bereich mit Bürstenmaterial od. dgl. zu bestücken und an dem verbleibenden Bereich der Seitenbürstenrohre Hochdruckdüsen anzuordnen. Hierdurch wäscht zwar jede Seitenbürste das Fahrzeug nur in seinem oberen oder unteren Bereich, jedoch liegen die Seitenbürsten in diesem von ihnen zu waschenden Bereich optimal am Fahrzeug an und können der Fahrzeugkontur besser folgen. So können z. B. die den oberen Fahrzeugbereich waschenden Seitenbürsten exakt der Kontur und Neigung des oberen Fahrzeugbereichs folgen und diesen optimal waschen, während die den unteren Fahrzeugbereich waschenden Seitenbürsten der Kontur dieses unteren Bereiches folgen. Bei den einer Fahrzeugseite zugeordneten Seitenbürstenrohren sollte sich die Bestückung mit Bürstenmaterial soweit nach oben bzw. unten erstrecken, daß sich die Arbeitsbereiche der Seitenbürsten höhenmäßig überlappen. Durch diese Überlappung der Arbeitsbereiche wird der höhenmäßig mittlere Fahrzeugbereich bei jedem Portalhub von den Seitenbürsten doppelt gewaschen und bei Personenkraftwagen im Bereich der Unterkante Seitenfenster, der Griffmulden, der Seitenspiegel, der Scheinwerfer, der Rückleuchten usw. eine intensive Bürstenreinigung erreicht. Auch Fahrzeuge mit eiförmiger Kontur können optimal gewaschen werden. Die an dem oberen oder unteren Fahrzeugbereich anliegenden und genau der Fahrzeugkontur folgenden Seitenbürsten dienen gleichzeitig zur Steuerung der Hochdruckdüsen. Da diese von den Seitenbürstenrohren getragen werden, folgen sie nämlich der Auswärts- oder Einwärtsbewegung der Seitenbürstenrohre und werden somit in einem vorbestimmten, im wesentlichen konstanten, optimalen Abstand zum Fahrzeug geführt. Hierdurch wird mit den Hochdruckdüsen ebenfalls eine optimale Reinigungswirkung erzielt. Da die Hochdruckreingiung in einem Fahrzeugbereich, z.B. den oberen Fahrzeugbereich erfolgt, während gleichzeitig durch die zugeordnete Seitenbürste der untere Fahrzeugbereich gewaschen wird, erfordert die Hochdruckreinigung keine zusätzliche Behandlungszeit. Im Vergleich zu herkömmmlichen Waschanlagen läßt sich auch bei Transporterfahrzeugen, bis hin zum oberen Karosseriebereich die Hochdruckreinigung optimal durchführen, wobei bei allen Fahrzeugtypen auch die Hochdruckreinigung unterhalb der Stoßstangen und im Schwellerbereich gründlich und karosserienah vollzogen werden kann. Durch die der Fahrzeugkontur folgenden Hochdruckdüsen, kann man bei geeigneter Schrägstellung derselben auch eine Hochdruckreinigung von waagrechten Fahrzeugpartien, wie Kofferraumdeckel, Motorhaube und Dach erreichen. Außerdem wird durch die Anordnung der Hochdruckdüsen an den Seitenbürstenrohren die Konstruktion vereinfacht, denn es können zusätzliche Bewegungseinrichtungen für die Hochdruckdüsen und Abtast- und Steuereinrichtungen hierfür entfallen. Die Abtastung und Steuerung erfolgt nämlich durch die der Fahrzeugkontur folgenden Waschbürsten.

Zweckmäßig erfolgt die Seitenwäsche mit zwei getrennt verfahrbaren Portalen, d.h. die einer Fahrzeugseite zugeordneten Seitenbürsten sind dann in zwei verschiedenen Portalen angeordnet. Hierdurch läßt sich, wie weiter unten noch näher beschrieben wird, das Waschergebnis optimieren und außerdem können aufwendigere Wasch- und Pflegeprogramme ohne wesentlich längere Gesamtbehandlungszeiten durchgeführt werden, weil verschiedene Programmschritte zusammengelegt werden können. Dies ist besonders wichtig, damit durch aufwendigere Wasch- und Pflegeprogramme die Durchsatzkapazität der Waschanlage nicht wesentlich beeinträchtigt wird.

Vorteilhafte Ausgestaltungen der Erfindung sind in den Unteransprüchen gekennzeichnet.

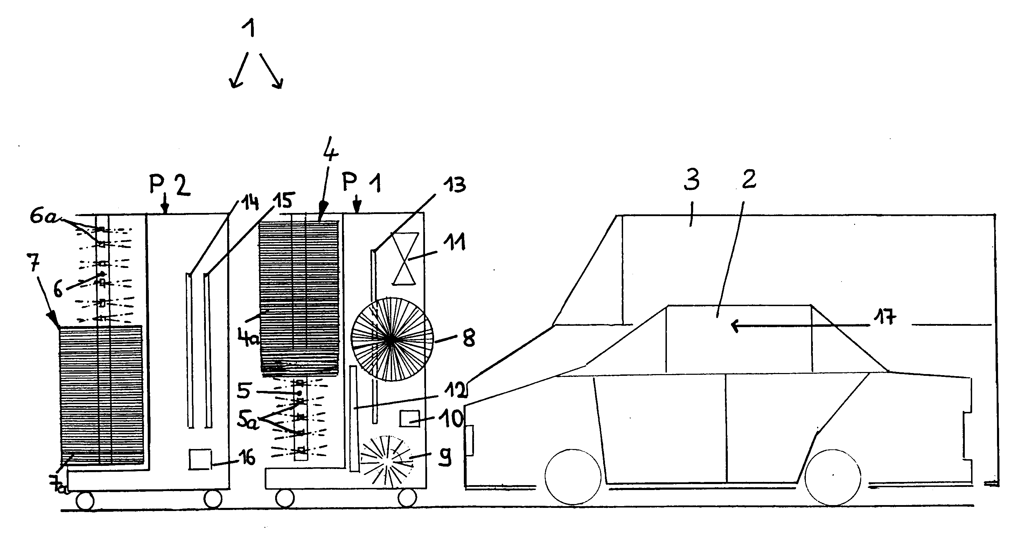

Die Erfindung wird in folgendem anhand eines in der Zeichnung dargestellten Ausführungsbeispieles näher erläutert.

Die Zeichnung zeigt einen schematischen Längsschnitt einer Waschanlage mit zwei getrennt verfahrbaren Portalen.

Die Waschanlage 1 weist bei der hier näher beschriebenen Ausführungsform zwei getrennt verfahrbare Portale P1 und P2 auf. Das dem zu waschenden Fahrzeug, beispielsweise einem Personenkraftwagen 2 oder einem Transporterfahrzeug oder Van 3 vor Beginn des Waschvorganges am nächsten liegende und sich dem Fahrzeug als erstes nähernde Portal P1 ist im folgenden als erstes Portal, das andere Portal P2 als zweites Portal bezeichnet. Das Portal P1 ist so aufgestellt, daß die um eine horizontale Achse rotierende Dachbürste 8 in Einfahrtsrichtung 17 gesehen, vor den beiden in diesem Portal P1 angeordneten Seitenbürsten 4 angeordnet ist. Dies hat u.a. den Vorteil, daß die stirnseitigen, vertikalen Portalrahmenflächen sowohl beim Maschinenstillstand in der Parkposition, als auch während des Waschbetriebes nicht verdeckt sind und daher zur Aufnahme von Einfahrts- bzw. Positionierampeln, als Werbefläche u. dgl. verwendbar sind. Würde man das Portal P1 um 180° drehen, dann wäre bei dem ersten Portalrücklauf die Dachbürste 8 vor den Seitenbürsten 4 in Fahrzeugkontakt und könnte durch ihre Steighöhe erkennen, ob es sich um einen Transporter 3 oder einen PKW 2 handelt. Diese Erkenntnis könnte dann unmittelbar auf das Waschverhalten der nachfolgenden Seitenbürsten 4 übertragen werden.

Die beiden Seitenbürsten 4, von denen nur eine gezeigt ist, enthalten jeweils ein rotierend antreibbares Seitenbürstenrohr 5, welches nur auf einem Teilbereich seiner axialen Länge, nämlich hier dem oberen Bereich mit Bürstenmaterial 4a oder einem anderen waschgeeigneten Material, wie Textil u. dgl. bestückt ist. Der mit Bürstenmaterial 4 bestückte Teilbereich erstreckt sich über etwas mehr als die halbe Länge des Seitenbürstenrohres 5, um, wie nachfolgend noch näher beschrieben wird, eine Überlappung der Arbeitsbereiche der Seitenbürsten 4 und der Seitenbürsten 7 im höhenmäßig mittleren Bereich des Fahrzeuges zu gewährleisten. Der restliche Teilbereich der Seitenbürstenrohre 5 trägt zum Fahrzeug gerichtete Hochdruckdüsen 5a. Diese Hochdruckdüsen sind jedoch nicht unmittelbar am Seitenbürstenrohr 5 angeordnet, sondern an einem nicht dargestellten Halter, der relativ zum Seitenbürstenrohr 5 drehbar ist. Dieser Halter wird während der Rotation des Seitenbürstenrohres 5 durch eine geeignete Einrichtung festgehalten, so daß er nicht mit dem Seitenbürstenrohr 5 rotiert und die von ihm getragenen Hochdruckdüsen zum Fahrzeug gerichtet sind.

Damit dies während des Waschens der Front und des Hecks des Fahrzeuges auch gewährleistet ist, kann der Halter in einem bestimmten Winkelbereich, von beispielsweise 180° um die Bürstenrohrachse schwenkbar sein. Bei dem Halter kann es sich beispielsweise um ein zum Seitenbürstenrohr 5 konzentrisches Rohr handeln.

Im zweiten Portal P2 sind ebenfalls zwei Seitenwaschbürsten 7 angeordnet, von denen ebenfalls nur eine gezeigt ist. Auch hier ist das Seitenbürstenrohr 6 nur auf einem Teilbereich seiner axialen Länge, nämlich hier dem unteren Teilbereich mit Bürstenmaterial 7a bestückt. Die Bestückung mit Bürstenmaterial 7a erstreckt sich soweit nach oben, daß sich die Arbeitsbereiche der Seitenbürsten 4 und 7 höhenmäßig deutlich überlappen. Durch diese Überlappung soll erreicht werden, daß das Fahrzeug in seinem höhenmäßig mittleren Bereich nacheinander von den beiden Seitenbürsten 4 und 7, also doppelt gewaschen wird und daß nicht irgendwelche mittleren Fahrzeugbereiche ungewaschen bleiben. Diese Überlappung ist auch deshalb wichtig, weil bei extrem eiförmig konzipierten Fahrzeugen die Seitenbürsten 4 des Portals P1 beim Waschen eine starke Schräglage nach innen einnehmen und gleichzeitig die Seitenbürsten 7 des Portals P2 im unteren eventuell ebenfalls eiförmig zulaufenden Karosserieteil eine Schräglage in entgegengesetzter Richtung einnehmen. Auf der anderen Seite darf die Überlappung aber auch nicht zu groß gewählt werden, da sonst die Hochdruckwäsche mittels der Hochdruckdüsen 5a und 6a im mittleren Fahrzeugbereich nicht mehr gewährleistet wäre. Man kann jedoch durch Schrägstellung einiger Hochdruckdüsen trotz der Überlappung der Bürsten erreichen, daß auch im Überlappungsbereich eine Hochdruckwäsche stattfindet. Desgleichen kann man durch diese Schrägstellung insbesondere der Hochdruckdüsen 6a erreichen, daß die Hochdruckstrahlen auch auf waagerechte Fahrzeugflächen gerichtet sind und damit auch eine Hochdruckvorwäsche dieser Fläche ausgeführt werden kann. Da die Bestückung mit Hochdruckdüsen 5a und 6a praktisch über die ganze Fahrzeughöhe reicht, können auch Transporterfahrzeuge 3 über die ganze Höhe mit Hochdruck gereinigt werden. Die Haltung und Ausrichtung der Hochdruckdüsen 6a auf dem Seitenbürstenrohr 6 erfolgt in ähnlicher Weise mit einem nicht dargestellten und nicht mitrotierenden Halter, in ähnlicher Weise wie es zuvor bezüglich der Hochdruckdüsen 5a beschrieben wurde. Die Seitenbürsten 4 und 7 bzw. ihre Seitenbürstenrohre 5 und 6 sind an den Portalen P1 und P2 in bekannter Weise senkrecht zur Portalbewegungsrichtung ausweichfähig gelagert und in Richtung zum Fahrzeug hin über dessen Längsmittelebene hinaus verstellbar, so daß beim Waschen von Front und Heck die sogenannten Mittenüberdeckung durchgeführt werden kann.

Zur Trocknung des Fahrzeuges ist an dem Portal P1 eine waagerechte, höhenverstellbare Dachdüse 11 angeordnet, deren Höhenverstellung durch eine übliche, die Fahrzeugkontur abtastende Lichtschrankensteuerung erfolgt. Außerdem sind im Portal P1 zur Trocknung mindestens zwei Seitendüsen 12 vorgesehen, die ebenfalls verstellbar ausgeführt sein können. Die Dachdüse 11 sollte gegenüber der Dachbürste 8 soweit versetzt angeordnet sein, daß während des Trocknungshubes des Portals P1 kein Wasser mehr von der Bürste 8 auf die bereits getrocknete Fahrzeugfläche abtropfen kann.

Ferner kann am Portal P1 eine Aufbringvorrichtung 10 vorgesehen sein, mit der Felgenreinigungschemikalien auf die Felgen gesprüht und nach kurzer Einwirkzeit durch die Radwascheinrichtung 9 einmassiert und abgewaschen wird. Gegebenenfalls kann das jeweilige Rad zur Schmutzaufweichung auch lediglich mit Wasser besprüht werden oder unbehandelt bleiben, bevor die Radwaschvorrichtung 9 ihre Reinigungstätigkeit aufnimmt.

Ferner ist am Portal P1 eine Aufbringvorrichtung in Form eines Auftragsbogens für Shampoo oder ein anderes Reinigungsmittel angeordnet. Mit der im Portal P2 angeordneten Aufbringvorrichtung 14, kann Aktiv-Schaum und/oder Shampoo oder ein anderes Reinigungsmittel aufgetragen werden. Ein oder mehrere Aufbringvorrichtungen 15 dienen zum Aufbringen von Konservierungsmittel, Kalt-, Heiß- oder Schaumwachs und eventuell eines chemischen Trocknungsmittels, welches den Trocknungsvorgang optimiert. Mittels dieser und weiterer Aufbringvorrichtungen kann auch Frischwasser, Osmosewasser od. dgl. aufgebracht werden.

Schließlich kann an einem der Portale auch noch eine zusätzliche Hochdruckeinheit 16 vorgesehen sein, die vor der ersten Bürstenwäsche den Grobschmutz an den unteren bis mittleren Karosserieflächen entfernt oder zumindest aufweicht.

Mittels der Seitenbürsten 4 kann der obere und mittlere Fahrzeugbereich gewaschen und dabei gleichzeitig der mittlere und untere Fahrzeugbereich mit Hochdruckstrahlen behandelt werden. Umgekehrt dienen die Seitenbürsten 7 zum Waschen des unteren und mittleren Fahrzeugbereiches wobei sich im mittleren Fahrzeugbereich die Arbeitsbereiche der beiden Bürsten 4 und 7 überlappen. Gleichzeitig mit dem Waschen durch die Bürsten 7 kann der obere und zum Teil auch der mittlere Bereich mittels der Hochdruckdüsen 6a gereinigt werden. In beiden Fällen werden die Hochdruckdüsen 5a bzw. 6a durch die zugeordneten Seitenbürsten 4 und 7 in vorbestimmtem Abstand von der Fahrzeugoberfläche karosserienah entlang geführt.

Bei der Wäsche eines Personenkraftwagens mit Stufenheck ist es ausreichend, daß die Seitenbürsten 7 im Front- und Heckbereich des Fahrzeuges die sogenannte Mittenüberdeckung durchführen. Bei Personenkraftwagen mit Stufenheck haben die Seitenbürsten 4 dagegen lediglich die Aufgabe, durch das Front- und heckseitige Abtasten des Fahrzeuges die Hochdruckdüsen 5a karosserienahe an die Front bzw. das Heck heranzuführen. Die eigentliche Bürstenwäsche mit geregeltem Anpreßdruck erfolgt bei Personenkraftwagen mit den Seitenbürsten 4 lediglich an den mittleren und oberen seitlichen Karosserieteilen, während die Seitenbürsten 7 den unteren und mittleren Fahrzeugbereich waschen.

Nachfolgend wird die Arbeitsweise anhand eines qualitativ besonders hochwertigen Programmes näher beschrieben.

Bei einem Programm mit Aktiv-Schaum-Vorwäsche, Hochdruckreinigung, Bürstenwäsche, Wachspflege und Trocknung ergibt sich nachfolgender Programmablauf. Nachdem ein Fahrzeug, z.B. ein Personenkraftwagen 2 oder ein Transportfahrzeug 3 in bekannter Weise richtig vor dem ersten Portal P1 positioniert wurde, startet das Portal P1 mit einer ersten Vorwärtsfahrt und trägt im Radbereich mit der Aufbringvorrichtung 10 eine Felgenreinigungschemikalie auf die Felgen oder auch gegebenenfalls lediglich Wasser mit oder ohne Shampoozusatz auf. So setzt das Portal P1 die komplette erste Überfahrt über das Fahrzeug fort und bleibt an der Rückseite des Fahrzeuges 2 oder 3 stehen. In angemessenem Abstand folgt das Portal P2 und trägt mit der Aufbringvorrichtung 14 Aktiv-Schaum auf. Über die zusätzliche Hochdruckeinheit 16 im Portal P2 wird dabei im unteren und mittleren Fahrzeugbereich, einschließlich Rad und Felge, der Grobschmutz abgespritzt, so daß vor der anschließend beginnenden Bürstenwäsche eine Vorreinigung ermöglicht wird. Das Portal P2 fährt soweit über das Fahrzeug 2, 3 hinweg, daß es bei seiner ersten Rückwärtsfahrt mit der Seitenbürste 7 etwa in der Mitte des Hecks des Fahrzeugs beginnen kann. Die Mittenüberdeckung am Heck kann entweder gleich bei dieser ersten Rückwärtsfahrt oder bei der zweiten Rückwärtsfahrt erfolgen. Während nun das Portal P2 mit seiner ersten Rückwärtsfahrt mit den Seitenbürsten 7 beginnt, wird gleichzeitig mit den Hochdruckdüsen 6a im oberen Fahrzeugbereich und teilweise auf die waagerechten Karosseriepartien Hochdruckwasser aufgespritzt. Das Waschen mit den Seitenbürsten 7 und auch die Hochdruckreinigung mittels der Hochdruckdüsen 6a erfolgt also mit dem Portal P2 gleichzeitig. Dieses fährt mit den Seitenbürsten 7 waschend über das Fahrzeug zurück, während das Portal P1 in angemessenem Abstand ebenfalls die erste Rückwärtsfahrt startet und mit den Seitenbürsten 4 und der Dachbürste 8 das Waschen beginnt und beim jeweiligen Erreichen der Fahrzeugachsen mit der Rad- und Felgenwascheinrichtung 9 die Rad- und Felgenreinigung durchführt. Reinigungschemikalien werden in erforderlichem Maße mit den Aufbringvorrichtungen 13, 14 abgegeben. Gleichzeitig mit der Bürstenwäsche durch die Seitenbürsten 4 erfolgt die Hochdruckreinigung mittels der Hochdruckdüsen 5a an dem unteren bis mittleren Fahrzeugbereich. Das Portal P1 macht die Mittenüberdeckung mit den Seitenbürsten 4 entweder an diesem Startpunkt am Heck des Transportfahrzeuges 3 oder erst zu einem späteren Zeitpunkt bei der Portalvorwärtsfahrt zu dieser Position. Während der Mittenüberdeckung mit den Seitenbürsten 4 und 7 wird durch die gleichzeitige Hochdruckaktivität der Hochdruckdüsen 5a, 6a sowohl die Front- und Heckpartie als auch die gesamten Seitenflächen von Transportfahrzeugen und Vans optimal gereinigt. Eine Mittenüberdeckung ist bei einem Personenkraftwagen mit Stufenheck und im Frontbereich mit den Seitenbürsten 4 des Portals P1 nicht notwendig. Beide Portale P 2 und P1 fahren hintereinander waschend über das Fahrzeug hinweg in Richtung ihrer Ausgangs- bzw. Parkposition. Hat auch die Dachbürste 8 die Front des Fahrzeugs gewaschen, so setzen sich beide Portale P1 und P2 mit allen Bürsten 4, 7, 8 und geänderter Drehrichtung in einer zweiten Vorwärtsfahrt waschend in Richtung Fahrzeugheck bzw. Halleneinfahrt in Bewegung. Das Portal P2 führt an der Front des Fahrzeuges die Mittenüberdeckung mit den Seitenbürsten 7 aus und folgt dem Portal P1 in angemessenem Abstand in Richtung Halleneinfahrt mit den waschenden Seitenbürsten 7. Während dieser zweiten Vorwärtsfahrt können die Hochdruckdüsen erneut aktiviert werden, um den Reinigungseffekt nochmals zu erhöhen. Normalerweise ist die Hochdruckreinigung allerdings mit dem ersten Hub bereits ausreichend durchgeführt. Die zweite Hochdruckbehandlung würde allerdings keinen zeitlichen Verlust bedeuten. Wenn beide Portale waschend über das Fahrzeug hinweggefahren sind und eventuell die Mittenüberdeckung mit den Seitenbürsten 7 am Heck des Fahrzeuges durchgeführt wurde, ist die eigentliche Wäsche beendet. Das Portal P2 fährt nun in einer zweiten Rückwärtsfahrt ohne Bürstenaktivitäten in seine Parkstellung zurück und trägt dabei Pflegewachs oder anderes Konservierungsmittel mit der Aufbringvorrichtung 15 auf das Fahrzeug auf. Bei einem sogenannten Zwei-Komponenten-Wachs kann das Portal P2 neben dem eigentlichen Pflegewachs auch noch zusätzlich ein chemisches Trocknungsmittel auftragen, um die Trocknungswirkung zu verbessern. In seiner Parkstellung angekommen ist der Arbeitsvorgang des Portals P2 zu Ende, Das Portal P1 startet seine zweite Rückwärtsfahrt in angemessenem Abstand und trocknet mittels der Dachdüse 11 und der Seitendüsen 12 das Fahrzeug, was bei entsprechend starker Auslegung der Trocknungsvorrichtung bei einem Fahrzeugüberlauf erfolgen kann. Wenn das Portal P 1 seine Parkposition erreicht hat, ist das gesamte Programm beendet.

Bei geringerer Ventilatorenleistung können auch eineinhalb bis zwei Trockenüberläufe erfolgen. Eine weitere Möglichkeit der eineinhalbfachen Trocknung erfolgt in der Form, daß das Portal P1 zunächst etwa bis zur Mitte des Fahrzeuges fährt und dabei in schneller Portalfahrt die Dachdüse 11 absenkt und die Seitendüsen 12 dem Fahrzeug genähert werden. Ist so etwa die Mitte des Fahrzeuges erreicht, dann wird die Fahrtrichtung des Portals P1 umgeschaltet und es bewegt sich trocknend zum Heck des Fahrzeuges hin. Dort angekommen wird das Portal P1 in Rückwärtsfahrt versetzt und die Trocknung erfolgt nun mit langsamer Portalgeschwindigkeit vom Heck des Fahrzeuges in Richtung Parkposition. Die Praxis hat jedoch gezeigt, daß bei ausreichender Gebläseleistung eine einmalige Portalüberfahrt mit langsamer Portalgeschwindigkeit ausreichend ist, um ein gutes Trocknungsergebnis zu erzielen.

Aus der vorstehenden Programmbeschreibung ergibt sich, daß auch bei einem qualitativ sehr hochwertigen Programm die komplette Fahrzeugbehandlung nach zwei Vorwärts- und zwei Rückwärtsbewegungen der Portale P1 und P2, also nach insgesamt vier Fahrzeugüberläufen beendet ist. Dies ist eine erhebliche Kapazitätserhöhung gegenüber herkömmlichen Verfahren bei gleichem Programm.

Selbstverständlich können mit der erfindungsgemäßen Vorrichtung auch einfachere Waschprogramme durchgeführt werden, so z. B. ein Programm mit Aktiv-Schaum, Bürstenwäsche, Konservierung und Trocknung, also ein Programm ähnlich wie das vorherbeschriebene, jedoch ohne Hochdruck, ein Programm mit Bürstenwäsche, Konservierung und Trocknung ohne Hochdruckreinigung oder mit Hochdruckreinigung, ein Programm mit Bürstenwäsche, Trocknung ohne Hochdruckreinigung oder mit Hochdruckreinigung und ein Programm mit Bürstenwäsche ohne oder mit Hochdruckreinigung. Alle diese Programme, mit Ausnahme des zuletzt aufgeführten, erfordern bei Verwendung von zwei getrennt verfahrbaren Portalen nur zwei Vorwärts- und zwei Rückwärtsfahrten derselben, also insgesamt vier Fahrzeugüberläufe, ohne daß sich bei Wahl der Hochdruckreingiung die Gesamtwaschzeit oder die Anzahl der Überläufe verändert. Wenn nur die Bürstenwäsche mit oder ohne Hochdruck durchgeführt wird, ist nur eine Vorwärts- und eine Rückwärtsbewegung der Portale erforderlich.

Man kann das erfindungsgemäße Verfahren auch so ausüben und hierzu die Vorrichtung so ausgestalten, daß alle Bürsten nur an einem einzigen Portal oder zwei zusammengekuppelten Portalen angeordnet werden. Auch in diesem Fall wird mit sehr geringem konstruktiven Aufwand eine sehr gute Hochdruckreinigung ohne zusätzlichen Zeitaufwand gewährleistet. Der konstruktive und steuerungstechnische Aufwand ist bei Verwendung eines Portales oder von zwei zusammengekoppelten Portalen geringer. Jedoch wird dieser Vorteil mit dem Nachteil erkauft, daß bei allen zuvor beschriebenen Waschprogrammen mit Trocknung anstelle von vier Fahrzeugüberläufen sechs Fahrzeugüberläufe des oder der Portale also insgesamt drei Vorwärtsfahrten und drei Rückwärtsfahrten erforderlich sind, wodurch sich die Durchsatzkapazität gegenüber der Variante mit zwei getrennt verfahrbaren Portalen verringert. Die Waschanlage mit zwei getrennt verfahrbaren Portalen erzielt durch die Kombination von Bürstenwäsche und Hochdruck-(Vor)Wäsche sowie der Möglichkeit der optimalen Wäsche von Fahrzeugen mit eiförmiger Kontur nicht nur hervorragende Reinigungsergebnisse, sondern auch die zuvor beschriebene Schnelligkeit und durch das Zusammenlegen einiger Programmschritte. Hieraus ergibt sich, daß trotz zunehmender Programmqualität und Auswahl von zusätzlichen Leistungsmerkmalen keine Verlängerung der Gesamtbehandlungszeit hingenommen werden muß. Die Durchsatzkapazität leidet also nicht unter der Auswahl qualitativ hochwertiger Programme, was die Wirtschaftlichkeit der Anlage erhöht.

Außerdem kann bei zwei getrennten Portalen die für die Trocknung erforderliche Dachdüse in dem einen Portal und die Seitendüsen in dem anderen Portal untergebracht werden, so daß sich die aus den Düsen austretenden Luftströme gegenseitig nicht behindern. Eine weitere Möglichkeit besteht darin, die Trocknung in einem dritten Portal anzuordnen, welches zweckmäßig hinter einer Trennwand installiert ist. Das zuvor gewaschene Fahrzeug fährt dann bei dieser Variante durch die Trennwand zu dem Trocknungs-Portal.

## Patentansprüche

1. Verfahren zum Waschen von Fahrzeugen mit Dach- und Seitenbürsten (8, 47) in einer Waschanlage mit mindestens einem fahrbaren Portal (81, 82), wobei zum Waschen einer Fahrzeugseite jeweils zwei Seitenbürsten (4, 7) vorgesehen sind, die rotierend antreibbare Seitenbürstenrohre (5, 6) enthalten, welche mit Bürstenmaterial oder anderweitigen, waschgeeigneten Materialien wie Textil und dergleichen bestückt sind, dadurch gekennzeichnet, daß die Seitenwäsche im oberen und unteren Fahrzeugbereich getrennt voneinander erfolgt und hierzu die Seitenbürstenrohre (5, 6) jeweils nur auf einem Teilbereich ihrer axialen Länge mit Bürstenmaterial (4a, 7a) oder dergleichen bestückt sind, während der restliche Teilbereich der Seitenbürstenrohre zum Fahrzeug gerichtete Hochdruckdüsen (5a, 6a) trägt, die nicht mit den Seitenbürstenrohren rotieren.

2. Verfahren nach Anspruch 1, dadurch gekennzeichnet, daß die Seitenwäsche im höhenmäßig mittleren Fahrzeugbereich überlappend nacheinander durch die beiden einer Fahrzeugseite zugeordneten Seitenbürsten erfolgt.

3. Verfahren nach Anspruch 1 oder 2, dadurch gekennzeichnet, daß die Seitenwäsche mit zwei getrennt verfahrbaren Portalen (P1, P2) erfolgt.

4. Verfahren nach Anspruch 3, dadurch gekennzeichnet, daß die Dachwäsche nur mit dem sich dem Fahrzeug als erstes nähernden, ersten Portal (P1) durchgeführt wird.

5. Verfahren nach Anspruch 3, dadurch gekennzeichnet, daß die Front- und Heckwäsche bei Personenkraftwagen mit Stufenheck nur mit den Seitenbürsten (7), deren Seitenbürstenrohre im unteren Teilbereich mit Bürstenmaterial oder dgl. bestückt sind, durchgeführt wird.

6. Verfahren nach Anspruch 3, dadurch gekennzeichnet, daß in einem ersten Vorwärtshub des ersten Portals Räder und Felgen mit Wasser oder Felgenreinigungschemikalien besprüht und erst beim Rückwärtshub dieses Portals die eigentliche Rad- und Felgenwäsche mit Radbürste (9) und/oder Hochdruckrotoren durchgeführt wird.

7. Vorrichtung zum Waschen von Fahrzeugen mit Dach- und Seitenbürsten (8, 4, 7), die an mindestens einem verfahrbaren Portal (81, 82) angeordnet sind und rotierend antreibbare Bürstenrohre (5, 6) aufweisen, welche mit Bürstenmaterial oder einem anderen waschgeeigneten Material, wie Textil und dergl. bestückt sind, wobei zum Waschen jeder Fahrzeugseite jeweils zwei Seitenbürsten (4, 7) vorgesehen sind, dadurch gekennzeichnet, daß die Seitenbürstenrohre (5, 6) nur auf einem Teilbereich ihrer axialen Länge mit Bürstenmaterial (4a, 7a) oder einem anderen waschgeeigneten Material bestückt sind, während der restliche Teilbereich der Seitenbürstenrohre (5, 6) zum Fahrzeug gerichtete Hochdruckdüsen (5a, 6a) trägt, wobei von den beiden einer Fahrzeugseite zugeordneten Seitenbürstenrohren (5, 6) das eine (5) nur in seinem oberen Teilbereich mit Bürstenmaterial (4a) oder dgl. zum Waschen des oberen Fahrzeugbereiches und das andere (6) nur in seinem unteren Teilbereich mit Bürstenmaterial (7a) oder dgl. zum Waschen des unteren Fahrzeugbereiches bestückt ist und wobei die Hochdruckdüsen (5a, 6a) an einem vom zugehörigen Seitenbürstenrohr (5, 6) getragenen Halter angeordnet sind, der nicht mit diesem rotiert.

8. Vorrichtung nach Anspruch 7, dadurch gekennzeichnet, daß der Halter der Hochdruckdüsen (5a, 6a) um die Bürstenrohrachse schwenkbar ist.

9. Vorrichtung nach Anspruch 7, dadurch gekennzeichnet, daß bei den einer Fahrzeugseite zugeordneten Seitenbürstenrohren (5, 6) sich die Bestückung mit Bürstenmaterial (4a, 7a) so weit nach unten bzw. oben erstreckt, daß sich die Arbeitsbereiche der Seitenbürsten (4, 7) höhenmäßig überlappen.

10. Vorrichtung nach einem der Ansprüche 7 bis 9, dadurch gekennzeichnet, daß die einer Fahrzeugseite zugeordneten Seitenbürsten (4, 7) in zwei getrennt verfahrbaren Portalen (P1, P2) angeordnet sind.

11. Vorrichtung nach einem der Ansprüche 7 bis 10, dadurch gekennzeichnet, daß in mindestens einem Portal (P1, P2) wenigstens eine Aufbringungsvorrichtung (10, 13, 14, 15) für Wasser und/oder Reinigungschemikalien und/oder Konservierungsmittel und/oder chemische Trocknungsmittel angeordnet ist.

12. Vorrichtung nach einem der Ansprüche 7 bis 11, dadurch gekennzeichnet, daß an einem Portal (P1) Radwascheinrichtungen (9) vorgesehen sind.

13. Vorrichtung nach einem der Ansprüche 7 bis 12, dadurch gekennzeichnet, daß an einem Portal (P2) zusätzliche Hochdruckeinheiten (16) angeordet sind.

## Claims

1. Method for washing motor vehicles with roof and side brushes (8, 4, 7) in a washing plant with at least one moveable portal (P1, P2), there being provided for washing one side of a vehicle two side brushes (4, 7) respectively which contain side brush tubes (5, 6) which can be actuated in a rotating manner and which are fitted with brush material or other materials suitable for washing purposes such as a textile or the like, characterised in that the side washes in the upper and lower vehicle regions take place separately from one another and for this purpose the side brush tubes (5, 6) respectively are fitted only on one part region of their axial length with brush material (4a, 7a) or the like while the remaining part region of the side brush tubes bears high pressure nozzles (5a, 6a) which are directed towards the vehicle and which do not rotate with the side brush tubes.

2. Method according to Claim 1 characterised in that the side-washes take place height-wise in the central area of the vehicle in a successively overlapping manner by means of both side brushes which are assigned to one side if the vehicle.

3. Method according to Claim 1 or 2 characterised in that the side-washes take place with two separately moveable portals (P1, P2).

4. Method according to Claim 3 characterised in that the roof wash is performed with only the first portal (P1) which approaches the vehicle first.

5. Method according to Claim 3 characterised in that the front and rear washes in private cars with a notchback are performed by only the side brushes (7), the side brush tubes of which are fitted in the lower part region with brush material or the like.

6. Method according to Claim 3 characterised in that in a first forwards stroke of the first portal the wheels and wheel rims are sprayed with water or chemicals for cleaning the wheel rims and only upon a backwards stroke of this portal is the actual wheel and wheel rim wash carried out with the wheel brush (9) and/or the high pressure rotors.

7. Device for washing motor vehicles with roof and side brushes (8, 4, 7) which are arranged on at least one moveable portal (P1, P2) and have brush tubes (5, 6) which can be actuated in a rotating manner and which are fitted with brush material or another material suitable for washing purposes such as a textile and the like, two side brushes (4, 7) being provided respectively for washing each side of the car, characterised in that the side brush tubes (5, 6) are fitted on only one part region of their axial length with brush material (4a, 7a) or another suitable material for washing purposes while the remaining part area of the side brush tubes (5, 6) bears high pressure nozzles (5a, 6a) directed towards the vehicle; one (5) of the two side brush tubes (5, 6) assigned to one side of the vehicle being fitted only in its upper part region with brush material (4a) or the like for washing the upper region of the vehicle and the other (6) being fitted only in its lower part region with brush material (7a) or the like for washing the lower region of the vehicle and high pressure nozzles (5a, 6a) being arranged on a retainer held by the pertinent side brush tube (5, 6), said retainer not rotating with the latter.

8. Device according to Claim 7 characterised in that the retainer of the high pressure nozzles (5a, 6a) can swivel around the brush tube axis.

9. Device according to Claim 7 characterised in that on the side brush tubes (5, 6) assigned to one side of the vehicle the fitting with brush material (4a, 7a) extends far enough downwards or upwards such that the operational areas of the side brushes (4, 7) overlap height-wise.

10. Device according to one of the Claims 7 to 9 characterised in that the side brushes (4, 7) assigned to one side of the vehicle are arranged in two separately moveable portals (P1, P2).

11. Device according to one of the Claims 7 to 10 characterised in that in at least one portal (P1, P2) there is arranged at least one device (10, 13, 14, 15) for applying water and/or cleaning chemicals and/or preservation agents and/or chemical drying agents.

12. Device according to one of the Claims 7 to 11 characterised in that wheel washing devices (9) are arranged on one portal (P1).

13. Device according to one of the Claims 7 to 12 characterised in that additional high pressure units (16) are arranged on one portal (P2).

## Revendications

1. Procédé pour laver des véhicules par des brosses de toit et latérales (8, 4, 7) dans une installation de lavage possédant au moins un portique (P1, P2) déplaçable, procédé selon lequel on a prévu, pour laver un côté d'un véhicule, deux brosses latérales (4, 7) qui contiennent des tubes porteurs (5, 6) pouvant être entraînés en rotation et garnis de matériau pour brosses ou d'autres matériaux convenant pour le lavage, tels que les matériaux textiles ou analogues, caractérisé en ce que le lavage des côtés latéraux d'un véhicule s'effectue séparément dans une partie supérieure et une partie inférieure du véhicule et que, dans ce but, les tubes (5, 6) des brosses latérales sont seulement garnis chacun de matériau pour brosses (4a, 7a) ou analogue sur une partie de leur longueur axiale, tandis que la partie restante de ces tubes porte des buses haute pression (5a, 6a) dirigées vers le véhicule et ne tournant pas avec les tubes des brosses latérales.

2. Procédé selon la revendication 1, caractérisé en ce que le lavage de chacun des côtés latéraux dans la portion médiane du véhicule, dans le sens de la hauteur, s'effectue, à chevauchement, en deux opérations successives par les deux brosses latérales coordonnées à ce côté du véhicule.

3. Procédé selon la revendication 1 ou 2, caractérisé en ce que le lavage des côtés latéraux s'effectue par deux portiques (P1, P2) déplaçables séparément.

4. Procédé selon la revendication 3, caractérisé en ce que le lavage du toit d'un véhicule est effectué seulement par un premier portique (P1) qui est celui s'approchant en premier du véhicule.

5. Procédé selon la revendication 3, caractérisé en ce que le lavage de l'avant et de l'arrière de voitures de tourisme à arrière brisé, ou à coffre classique, s'effectue seulement par des brosses latérales (7) dont les tubes sont garnis de matériau pour brosses ou analogue dans leur partie inférieure.

6. Procédé selon la revendication 3, caractérisé en ce que, dans une première passe avant du premier portique, de l'eau ou des produits chimique de nettoyage de jantes est ou sont pulvérisés sur les roues et les jantes, le lavage proprement dit des roues et des jantes étant seulement effectué lors de la passe arrière de ce portique, par une brosse de roues (9) et/ou des rotors à haute pression.

7. Dispositif pour laver des véhicules par des brosses de toit et latérales (8, 4, 7) qui sont disposées sur au moins un portique (P1, P2) déplaçable et comportent des tubes de brosse (5, 6) pouvant être entraînés en rotation et garnis de matériau pour brosses ou d'un autre matériau convenant au lavage, un matériau, textile par exemple ou analogue, dispositif dans lequel chaque fois deux brosses latérales (4, 7) sont prévues pour laver chaque côté du véhicule, caractérisé en ce que les tubes (5, 6) des brosses latérales sont seulement garnis sur une partie de leur longueur axiale de matériau pour brosses (4a, 7a), ou d'un autre matériau convenant pour le lavage, tandis que la partie restante des tubes (5, 6) des brosses latérales porte des buses haute pression (5a, 6a) dirigées vers le véhicule, l'agencement étant tel que, parmi les deux tubes (5, 6) des brosses latérales coordonnées à un côté du véhicule, un tube (5) est seulement garni sur sa partie supérieure de matériau pour brosses (4a) ou analogue, en vue du lavage de la partie supérieure du véhicule, et l'autre tube (6) est seulement garni sur sa partie inférieure de matériau pour brosses (7a) ou analogue, en vue du lavage de la partie inférieure du véhicule, les buses à haute pression (5a, 6a) étant disposées sur un support, porté par le tube (5, 6) de la brosse latérale coordonnée, qui ne tourne pas avec ce tube.

8. Dispositif selon la revendication 7, caractérisé en ce que le support des buses haute pression (5a, 6a) peut être animé d'un pivotement autour de l'axe du tube de brosse coordonné.

9. Dispositif selon la revendication 7, caractérisé en ce que le garnissage en matériau pour brosses (4a, 7a) des tubes (5, 6) des brosses latérales coordonnées à un côté du véhicule, s'étend sur une telle distance, vers le bas ou vers le haut, que les zones de travail des brosses latérales (4, 7) se chevauchent dans le sens de la hauteur.

10. Dispositif selon une des revendications 7 à 9, caractérisé en ce que les brosses latérales (4, 7) coordonnées à un côté du véhicule sont disposées dans deux portiques (P1, P2) déplaçables séparément.

11. Dispositif selon une des revendications 7 à 10, caractérisé en ce qu'au moins un dispositif d'applicaqtion (10, 13, 14, 15) d'eau et/ou de produits chimiques de nettoyage et/ou agents de conservation et/ou agents chimiques de séchage est installé dans au moins un portique (P1, P2).

12. Dispositif selon une des revendications 7 à 11, caractérisé en ce que des dispositifs de lavage de roues (9) sont prévus sur un portique (P1).

13. Dispositif selon une des revendications 7 à 12, caractérisé en ce que des unités supplémentaires à haute pression (16) sont installées sur un portique (P2).
